# EUROPÄISCHE PATENTANMELDUNG

(11) **EP 1 817 993 A1**
(43) Veröffentlichungstag der Anmeldung: **15.08.2007**
(21) Anmeldenummer: 07000504.6
(22) Anmeldetag: 11.01.2007
(51) Int. Cl.: A47J 39/00

(54) **Verfahren zum Betrieb eines Speiseverteilsystems und Vorkühleinrichtung**

(30) Priorität: 12.01.2006 DE 102006001781
(71) Anmelder: Goseling, Hubert, 97959 Assamstadt (DE)
(72) Erfinder: Goseling, Hubert, 97959 Assamstadt (DE)
(74) Vertreter: von den Steinen, Axel

(57) **Zusammenfassung**

Die Erfindung betrifft ein Verfahren zum Betrieb eines Speiseverteilsystems mit zumindest einem Speisentransportwagen (01, 19), wobei der Speisentransportwagen (01, 19) ein Gehäuse (03) aufweist, in dessen thermisch isoliertem Innenraum (04) Speisen aufgenommen und gelagert werden können, und wobei der Speisentransportwagen (01, 19) eine Kühleinrichtung (09) aufweist, mit der der Innenraum (04) und die darin gelagerten Speisen gekühlt werden können. Der Speisentransportwagen (01, 19) wird vor der Befüllung mit Speisen an eine Vorkühleinrichtung (05, 20) angeschlossen und auf eine Vorkühltemperatur heruntergekühlt. Danach wird der Speisentransportwagen (O1, 19) nach Ende der Vorkühlung von der Vorkühleinrichtung (05, 20) getrennt und der vorgekühlte Innenraum (04) des Speisentransportwagens (01, 19) mit Speisen befüllt. Weiter betrifft die Erfindung eine Vorkühleinrichtung (05, 20) zur Durchführung des Vorkühlverfahrens.

## Beschreibung

Die Erfindung betrifft ein Verfahren zum Betrieb eines Speiseverteilsystems nach der Lehre des Verfahrenshauptanspruchs. Weiter betrifft die Erfindung eine Vorkühleinrichtung zur Verwendung in einem derartigen Verfahren.

Aus der DE 202 04 974 U1 ist ein Speisentransportwagen für Speisenverteilsysteme bekannt. Dieser Speisentransportwagen weist ein isoliertes Gehäuse mit einem Innenraum und einer Kühleinrichtung auf, so dass die in den Innenraum eingebrachten Speisen über eine bestimmte Dauer hinweg definiert gekühlt werden können. Als Kühleinrichtungen zur Kühlung des Speisentransportwagens können dabei passive Systeme mit einem Kühlmittelspeicher oder aktive Systeme eingesetzt werden. Bei passiven Kühleinrichtungen haben sich Systeme als besonders vorteilhaft erwiesen, bei denen die Kühlung durch Speicherung von Eisbrei in entsprechenden Kammern des Speisentransportwagens erfolgt.

Der Einsatz der bekannten Speisentransportwägen für Speisenverteilsysteme, insbesondere für "Cook and Chill"-Systeme im klinischen Bereich, ist dahingehend problematisch, dass die vorbereitende Zeit zur Kühltemperatur-Einstellung der Innenräume bzw. der Kühlkammern jeweils nach hygienisch erforderlichen Heißwasser-Reinigungen relativ lange dauert. Ein Problem besteht insbesondere darin, dass die herkömmlichen Speisentransportwägen nach der mit Heißwasser durchgeführten Reinigung durch den sich anschließenden zeitaufwendigen Abkühlvorgang nicht sofort wieder einsatzbereit sind. Zwar kann durch das Einfüllen von Eisbrei in die entsprechenden Kammern des Speisentransportwagens die Abkühlzeit signifikant verkürzt werden. Allerdings wird in diesen Fällen die Kühlmittelkapazität des Speisentransportwagens noch vor Beschickung mit Speisen erheblich verringert, da ein erheblicher Anteil der Kühlmittelkapazität des Eisbreis zur Abkühlung des Speisentransportwagens verwendet werden muss.

Ausgehend von diesem Stand der Technik ist es deshalb Aufgabe der vorliegenden Erfindung, ein neues Verfahren zum Betrieb eines Speiseverteilsystems mit Speisentransportwagen vorzuschlagen, bei dem bei hoher Kühlkapazität zugleich eine schnelle Wiederbeladung der Speisentransportwägen ermöglicht wird und außerdem eine möglichst geringe Keimbelastung im Speisentransportwagen auftritt. Weiter ist es Aufgabe der vorliegenden Erfindung, eine geeignete Vorrichtung zum Betrieb dieses Verfahrens vorzuschlagen.

Diese Aufgaben werden durch ein Verfahren und eine Vorkühleinrichtung nach der Lehre der beiden unabhängigen Hauptansprüche gelöst.

Vorteilhafte Ausführungsformen der Erfindung sind Gegenstand der Unteransprüche.

Das erfindungsgemäße Verfahren beruht auf dem Grundgedanken, dass der Speisentransportwagen vor der Befüllung mit Speisen an einer Vorkühleinrichtung angeschlossen und auf eine Vorkühltemperatur heruntergekühlt wird. Nach Ende dieser Vorkühlung wird der Speisentransportwagen dann von der Vorkühleinrichtung getrennt und der dann vorgekühlte Innenraum des Speisentransportwagens mit Speisen befüllt.

Durch die aktive Vorkühlung des Speisentransportwagens kann erreicht werden, dass der nach der Reinigung beispielsweise noch heiße bzw. warme Speisentransportwagen sehr rasch auf eine Temperatur heruntergekühlt wird, bei der das Wiederbeladen ermöglicht wird. Auf diese Weise kann der Durchsatz in einem Speiseverteilsystem erheblich erhöht werden, so dass die Anzahl der erforderlichen Speisentransportwägen sinkt. Durch die Vorkühlung des Innenraums wird außerdem erreicht, dass der Innenraum nicht durch das zur Kühlung des Speisentransportwagens vorgesehene Kühlmittel erst heruntergekühlt werden muss. Somit wird die Kühlmittelkapazität des Speisentransportwagens nach dem Beladen mit Speisen erheblich erhöht. Ein weiterer Vorteil des erfindungsgemäßen Verfahrens liegt darin, dass das kritische Temperaturband, in dem sich Keime an der Innenwandung des Innenraums vermehren können, sehr schnell überwunden wird, so dass sich die hygienischen Verhältnisse im Speisentransportwagen entsprechend verbessern.

Mit welcher Art Kühleinrichtung der Speisentransportwagen gekühlt wird, ist grundsätzlich beliebig. So können entweder aktive Kühlsysteme oder passive Kühlsysteme mit entsprechendem Kühlmittelspeicher vorgesehen sein. Nach einer bevorzugten Ausführungsform ist der Speisentransportwagen mit einem Kühlmittelspeicher ausgestattet, in dem ein geeignetes Kühlmittel, bevorzugt Eisbrei, gespeichert werden kann. Nach der Befüllung des Speisentransportwagens mit Speisen kann der Innenraum dann durch Wärmeaufnahme des Kühlmittels gekühlt werden.

Um die Durchlaufzeiten der Speisentransportwägen während des Betriebs des Speiseverteilsystems weiter zu verkürzen, ist es besonders vorteilhaft, wenn der Kühlmittelspeicher während der Vorkühlung des Innenraums an der Vorkühleinrichtung mit frischem Kühlmittel befüllt wird. Durch die gleichzeitige Vorkühlung des Innenraums und Befüllung des Kühlmittelspeichers mit Kühlmittel wird die erforderliche Vorbereitungszeit, bis der Speisentransportwagen wieder einsatzbereit ist, erheblich verkürzt.

Eine weitere Verkürzung der Vorbereitungszeit wird erreicht, wenn verbrauchtes Kühlmittel, das noch im Kühlmittelspeicher vorhanden ist, durch Zuführung von frischem Kühlmittel aus dem Kühlmittelspeicher verdrängt wird.

Da mit dem erfindungsgemäßen Verfahren der Speisentransportwagen sehr schnell und effektiv heruntergekühlt werden kann, werden Sterilisationsverfahren mit Hilfe von entsprechend hohen Temperaturen besonders attraktiv, da der ansonsten damit verbundene Nachteil, nämlich eine entsprechend lange Vorbereitungszeit zum Herunterkühlen der Speisentransportwägen von der Sterilisationstemperatur, entfällt. Es ist deshalb nach einer bevorzugten Verfahrensvariante vorgesehen, dass der Speisentransportwagen vor der Vorkühlung auf eine Sterilisationstemperatur erhitzt wird, um auf diese Weise alle gesundheitsschädlichen Keime abzutöten. Von der Sterilisationstemperatur kann der Speisentransportwagen dann durch die entsprechende Vorkühlung sehr schnell auf eine geeignete Betriebstemperatur, bei der der Speisentransportwagen erneut wieder mit Speisen beladen werden kann, heruntergekühlt werden.

In welcher Weise der Speisentransportwagen auf Sterilisationstemperatur erhitzt wird, ist grundsätzlich beliebig. Besonders bevorzugt sollten dazu heiße Reinigungsflüssigkeiten eingesetzt werden, so dass die Reinigung und Sterilisation des Speisentransportwagens sowohl durch Waschen des Speisentransportwagens mit den heißen Reinigungsflüssigkeiten als auch auf Grund des Temperatureinflusses bewirkt wird.

Soweit der Speisentransportwagen durch Erhitzen auf Sterilisationstemperatur desinfiziert wird, kann es nach einer Verfahrensvariante besonders vorteilhaft sein, wenn das im letzten Umlauf des Speisentransportwagens verbrauchte Kühlmittel vor der Erhitzung des Speisentransportwagens aus dem Kühlmittelspeicher entfernt wird. Auf diese Weise wird verhindert, dass das verbrauchte Kühlmittel auf die Sterilisationstemperatur erhitzt werden muss, wozu erhebliche Energiemengen letztendlich unnötig verbraucht werden.

In welcher Art die Vorkühlung des Innenraums erfolgt, ist grundsätzlich beliebig. Besonders schnell und effektiv kann der Innenraum auf die Vorkühltemperatur heruntergekühlt werden, wenn als Kühlmittel Kaltluft in den Innenraum eingefördert wird.

Die Kaltluft sollte dabei während der Vorkühlung bevorzugt mittels einer Umwälzeinrichtung zirkulierend umgewälzt werden, um dadurch einen hohen Wärmefluss von der Wandung des Innenraums zum Kühlmittel hin zu ermöglichen.

Welche Art von Kühlmittel zur Kühlung der Vorkühleinrichtung eingesetzt wird, ist grundsätzlich beliebig. Soweit die Speisentransportwägen mit Eisbrei gekühlt werden, ist es besonders vorteilhaft, wenn auch die Vorkühleinrichtung mit Eisbrei gekühlt wird, da auf diese Weise zur Kühlmittelversorgung von Speisentransportwägen und Vorkühleinrichtungen das gleiche Kühlmittel eingesetzt werden kann. Dadurch lassen sich erhebliche Kosten beim Aufbau des Speiseverteilsystems einsparen.

Zur Durchführung des erfindungsgemäßen Verfahrens wird weiter eine Vorkühleinrichtung vorgeschlagen. Diese Vorkühleinrichtung ist mit einem Kühlsystem ausgestattet, mit dem in den Innenraum des Speisentransportwagens ein geeignetes Kühlmittel, insbesondere Kaltluft, zur Vorkühlung zugefördert werden kann.

Die Vorkühleinrichtung sollte dabei bevorzugt mit einem Kaltluftgebläse ausgestattet sein, mit dem die Kaltluft zum einem in den Innenraum eingefördert und/oder während der Vorkühlung zirkulierend umgewälzt werden kann.

Um die Kaltluft vor und/oder während der Vorkühlung geeignet herunterkühlen zu können, sollte in der Vorkühleinrichtung ein Wärmetauscher vorgesehen sein, mit dem die Kaltluft durch ein geeignetes Kühlmittel, insbesondere Eisbrei, heruntergekühlt werden kann. Diese Art der Kühlung der Kaltluft mit Eisbrei ist insbesondere dann von Vorteil, wenn zur Kühlung des Innenraums der Speisentransportwägen ebenfalls Eisbrei in entsprechende Kühlmittelspeicher eingefüllt wird.

Um die Vorkühlung des Speisentransportwagens effektiv durchführen zu können, sollte der Speisentransportwagen bevorzugt in einer definierten Vorkühlposition an der Vorkühleinrichtung fixiert werden. Deshalb ist es besonders bevorzugt, wenn an der Vorkühleinrichtung Fixiereinrichtungen, beispielsweise Riegelelemente, vorgesehen sind, mit welchen die entsprechende Fixierung des Speisentransportwagens in der Vorkühlposition ermöglicht wird.

Die Effektivität des Vorkühlprozesses wird noch entscheidend dadurch verbessert, dass durch den fixierenden Eingriff der Fixiereinrichtung ein zumindest geringfügiger Andruck zwischen Vorkühleinrichtung und Speisentransportwagen aufgebracht wird. Auf diese Weise wird nämlich die Trennfuge zwischen Speisentransportwagen und Vorkühleinrichtung geschlossen, so dass das zur Vorkühlung eingesetzte Kühlmittel, beispielsweise Kaltluft, im Wesentlichen nicht austreten kann.

Zur Abdichtung der Trennfuge zwischen Speisentransportwagen und Vorkühleinrichtung kann weiterhin ein Dichtelement, beispielsweise eine Gummilippe, vorgesehen sein. Um eine definierte Fixierung und Abdichtung des Speisentransportwagens an der Vorkühleinrichtung zu ermöglichen, ist es besonders vorteilhaft, wenn die Fixiereinrichtung elektromotorisch antreibbar ist. Dazu können beispielsweise elektromotorisch antreibbare Riegelelemente vorgesehen sein, die den Speisentransportwagen bei Annäherung an der Vorkühleinrichtung fixieren.

In welcher Weise das Kühlmittel aus der Vorkühleinrichtung in den Speisentransportwagen überströmt, ist grundsätzlich beliebig. Da zusätzliche Einströmöffnungen auf Grund der Hygienevorschriften immer problematisch sind, ist es besonders vorteilhaft, wenn die Vorkühleinrichtung eine Kaltluftaustrittsöffnung aufweist, die derart angeordnet ist, dass die Kaltluft nach Fixierung des Speisentransportwagens an der Vorkühleinrichtung unmittelbar durch die zur Beschickung des Speisentransportwagens mit Speisen vorgesehene Beschickungsöffnung in den Speisentransportwagen überströmen kann. Auf diese Weise dient also die Beschickungsöffnung des Speisentransportwagens zugleich auch als Kaltlufteintrittsöffnung in den Speisentransportwagen.

Um einen möglichst hohen Kaltluftaustausch zwischen Vorkühleinrichtung und Innenraum des Speisentransportwagens zu ermöglichen, ist es besonders vorteilhaft, wenn der Querschnitt der Kaltluftaustrittsöffnung an der Vorkühleinrichtung im Wesentlichen dem Querschnitt der Beschickungsöffnung am Speisentransportwagen entspricht. Durch entsprechend geeignete Fixierung des Speisentransportwagens an der Vorkühleinrichtung ist es dann möglich, dass die Kaltluftaustrittsöffnung und die Beschickungsöffnung in der Vorkühlposition im Wesentlichen einander flächenkongruent gegenüberliegen.

Während der Vorkühlung wird die Kaltluftaustrittsöffnung der Vorkühleinrichtung durch den Speisentransportwagen verschlossen. Um auch in Zeiten, in denen kein Speisentransportwagen an die Vorkühleinrichtung angeschlossen ist, den unnötigen Austritt von Kaltluft aus der Vorkühleinrichtung zu verhindern, ist es besonders vorteilhaft, wenn die Kaltluftaustrittsöffnung mit einem Verschlusselement verschlossen werden kann. Dazu kann beispielsweise ein bevorzugt elektromotorisch antreibbares Verschlussrollo vorgesehen sein. Sobald ein Speisentransportwagen zur Vorkühlung an die Vorkühleinrichtung angeschlossen ist, wird die Verschlusseinrichtung geöffnet und dadurch die Vorkühlung des Innenraums im Speisentransportwagen ermöglicht. Am Ende des Vorkühlprozesses wird die Verschlusseinrichtung dann wieder verschlossen und anschließend der Speisentransportwagen von der Vorkühleinrichtung getrennt.

Soweit während des Vorkühlprozesses die im Wesentlichen zeitgleiche Befüllung des Speisentransportwagens mit Kühlmittel in den Kühlmittelspeicher bzw. die im Wesentlichen zeitgleiche Abfuhr von verbrauchtem Kühlmittel aus dem Kühlmittelspeicher vorgesehen ist, sollten die Vorkühleinrichtung und die Speisentransportwägen jeweils mit entsprechend geeigneten Kopplungsorganen vorgesehen sein, so dass nach Fixierung des Speisentransportwagens in der Vorkühlposition entsprechende Verbindungsleitungen für die Zufuhr und Abfuhr des Kühlmittels in den Kühlmittelspeicher bzw. aus dem Kühlmittelspeicher entstehen.

Dabei ist es besonders vorteilhaft, wenn an den Kopplungsorganen mechanische Führungselemente, beispielsweise Führungszapfen, vorgesehen sind, durch die der Speisentransportwagen bei Annäherung an die Vorkühleinrichtung mechanisch geführt wird. Durch diese Führungselemente werden die Kopplungsorgane selbst vor mechanischen Belastungen, insbesondere einem Verkanten der Kopplungsorgane, geschützt.

Durch Einrichtung entsprechend geeigneter Datenschnittstellen können während der Vorkühlung und/oder der Befüllung des Speisentransportwagens bestimmte Betriebsdaten, beispielsweise die Temperatur, die Bezeichnung des Speisentransportwagens oder der Standort, ein- und/oder ausgelesen werden. Diese Betriebsdaten können dann anschließend in einer zentralen Datenverarbeitung weiter verarbeitet werden.

Verschiedene Ausführungsformen der Erfindung sind in den Zeichnungen schematisch dargestellt und werden nachfolgend beispielhaft erläutert.

Es zeigen:
- **Fig. 1**: eine Vorkühleinrichtung mit daran angeschlossenem Speisentransportwagen in seitlicher Ansicht;
- **Fig. 2**: die Vorkühleinrichtung und den Speisentransportwagen gemäß **Fig. 1** im Querschnitt entlang der Schnittlinie I-I;
- **Fig. 3**: die Vorkühleinrichtung und den Speisentransportwagen gemäß **Fig. 2** nach Trennung des Speisentransportwagens;
- **Fig. 4**: eine zweite Ausführungsform einer Vorkühleinrichtung mit zugeordnetem Speisentransportwagen.

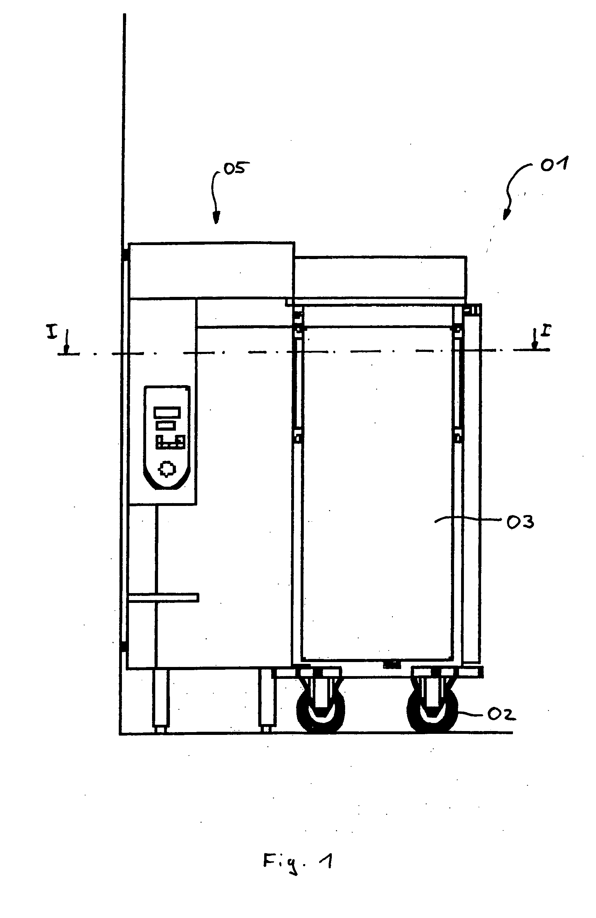

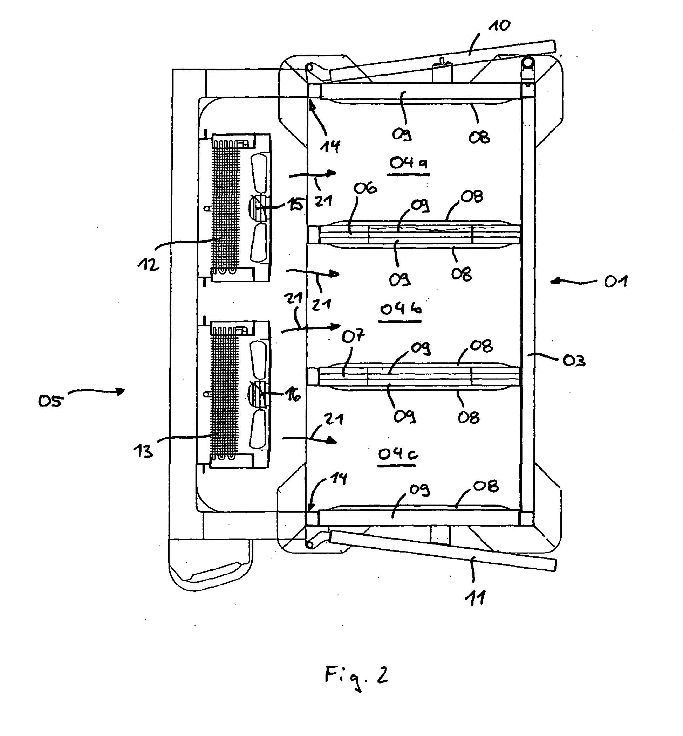

In **Fig. 1** ist ein Speisentransportwagen 01 in seitlicher Ansicht dargestellt. Der Speisentransportwagen 01 weist ein auf Rollen 02 verfahrbares Gehäuse 03 auf, das einen Innenraum 04 (siehe **Fig. 2**) thermisch isoliert umschließt.

Der Speisentransportwagen 01 ist an eine Vorkühleinrichtung 05 angeschlossen. Die Vorkühleinrichtung 05 dient dazu, den Innenraum 04 und die zugehörigen Innenwandungen des Gehäuses 03 auf eine Vorkühltemperatur aktiv herunterzukühlen, bevor der Speisentransportwagen 01 mit Speisen befüllt wird.

In **Fig. 2** sind der Speisentransportwagen 01 und die Vorkühleinrichtung 05 im Querschnitt entlang der Schnittlinie I-I dargestellt. Der Innenraum 04 des Speisentransportwagens 01 wird durch zwei Zwischenwände 06 und 07 in drei Abteilungen 04a, 04b und 04c aufgeteilt. An den seitlichen Wandungen des Gehäuses 03 und den Zwischenwänden 06 und 07 sind jeweils Tabletthalter 08 angebracht, so dass auf einer Höhe jeweils drei Tabletts nebeneinander im Innenraum 04 des Speisentransportwagens angeordnet werden können. Die Seitenwandungen des Gehäuses 03 und die Zwischenwände 06 und 07 sind außerdem als Hohlräume ausgebildet und dienen als Kühlmittelspeicher 09, die jeweils mit einer bestimmten Menge Eisbrei befüllt werden können. Durch den Eisbrei in den Kühlmittelspeichern 09 kann der Innenraum 04 über lange Zeit passiv gekühlt werden, so dass die im Speisentransportwagen 01 aufbewahrten Speisen frisch gehalten werden.

Nach der Reinigung des Speisentransportwagens 01 und einer damit verbundenen Erhitzung auf eine Sterilisationstemperatur wird der Speisentransportwagen 01 vor der Beschickung mit Speisen an die Vorkühleinrichtung 05 angeschlossen. Die Türen 10 und 11 des Speisentransportwagens 01 sind dabei geöffnet. Im Inneren der Vorkühleinrichtung 05 sind zwei Wärmetauscher 12 und 13 vorgesehen, die zur Kühlung primärseitig mit Eisbrei durchströmt werden und zur Erzeugung von Kaltluft dienen. Nach der elektromotorischen Verriegelung des Speisentransportwagens 01 in der in **Fig. 2** dargestellte Vorkühlposition ist die Trennfuge 14 zwischen Speisentransportwagen 01 und Vorkühleinrichtung 05 im Wesentlichen luftdicht abgedichtet, so dass die Kaltluft, angedeutet durch Strömungspfeile 21, aus der Vorkühleinrichtung 05 in den Innenraum 04 des Speisentransportwagens 01 überströmen kann. Dies wird durch elektromotorischen Antrieb zweier Kaltluftgebläse 15 und 16 unterstützt, die die Kaltluft 21 aus der Vorkühleinrichtung 05 in den Innenraum 04 einfördern und für eine Zirkulationsbewegung der Kaltluft 21 sorgen. Auf diese Weise wird der Innenraum 04 des Speisentransportwagens 01 innerhalb sehr kurzer Zeit, beispielsweise innerhalb von drei Minuten, von der Sterilisationstemperatur auf die zur Befüllung mit Speisen erforderliche Betriebstemperatur heruntergekühlt.

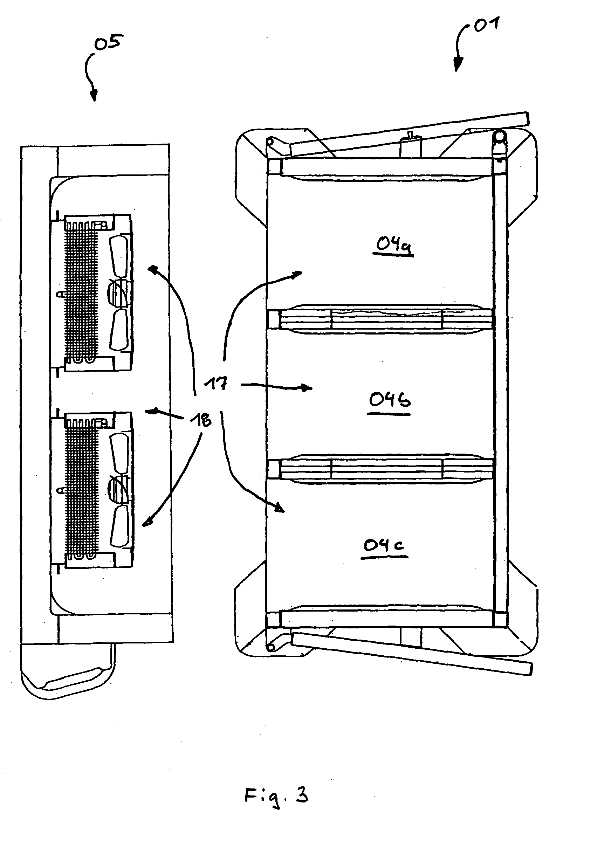

Zugleich mit der Vorkühlung des Innenraums 04 werden die Kühlmittelspeicher 09 mit neuem Eisbrei befüllt, wobei durch das Einfördern des frischen Eisbreis die im Kühlmittelspeicher 09 vorhandenen verbrauchten Kühlmittel verdrängt werden. Sobald die Kühlmittelspeicher 09 vollständig mit frischem Eisbrei befüllt sind und die erforderliche Vorkühltemperatur im Innenraum 04 erreicht ist, wird der Speisentransportwagen 01, wie in **Fig. 3** dargestellt, von der Vorkühleinrichtung 05 getrennt. Nach der Trennung von Speisentransportwagen 01 und Vorkühleinrichtung 05 wird die Beschickungsöffnung 17 des Speisentransportwagens 01 durch Schließen der Türen 10 und 11 und die Kaltluftaustrittsöffnung 18 der Vorkühleinrichtung 05 durch Herunterfahren eines Schließrollos verschlossen, um auf diese Weise Kühlverluste zu vermeiden. Der Speisentransportwagen 01 kann anschließend zu einer Beschickungsstation befördert und dort mit frischen Speisen beschickt werden.

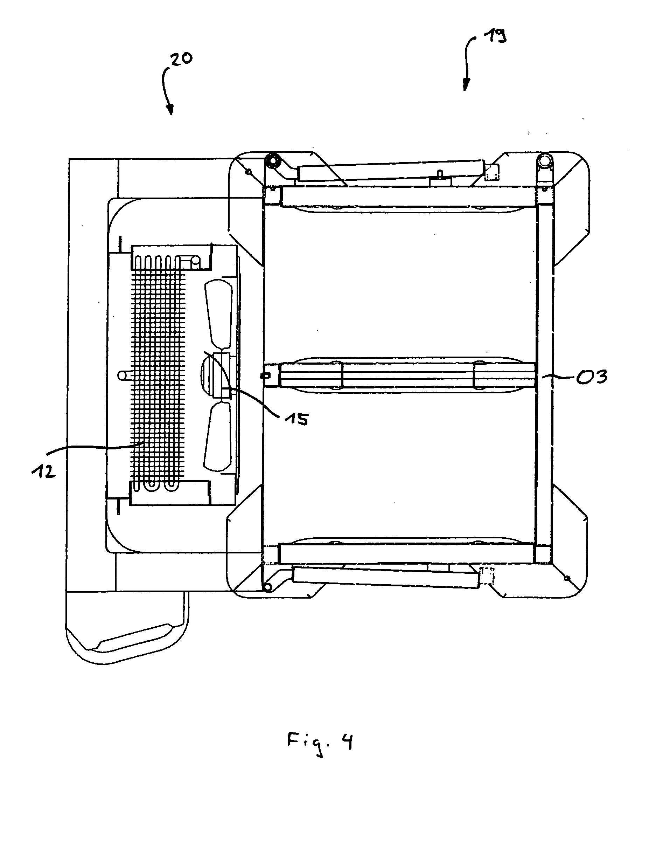

**Fig. 4** zeigt eine zweite Ausführungsform eines Speisentransportwagens 19 mit zugeordneter Vorkühleinrichtung 20. Der Speisentransportwagen 19 entspricht in seinem grundsätzlichen Aufbau dem Speisentransportwagen 01 und unterscheidet sich im Wesentlichen durch seine Breite. Auch die Vorkühleinrichtung 20 entspricht in Aufbau und Funktion im Wesentlichen der Vorkühleinrichtung 05, ist jedoch in ihrer Breite auf die Breite des Speisentransportwagens 19 abgestimmt und lediglich mit einem Wärmetauscher 12 und einem Kühlluftgebläse 15 ausgestattet.

## Patentansprüche

1. Verfahren zum Betrieb eines Speiseverteil systems mit zumindest einem Speisentransportwagen (01, 19), wobei der Speisentransportwagen (01, 19) ein Gehäuse (03) aufweist, in dessen thermisch isoliertem Innenraum (04) Speisen aufgenommen und gelagert werden können, und wobei der Speisentransportwagen (01, 19) eine Kühleinrichtung (09) aufweist, mit der der Innenraum (04) und die darin gelagerten Speisen gekühlt werden können,
**dadurch gekennzeichnet,**
**dass**
- der Speisentransportwagen (01, 19) vor der Befüllung mit Speisen an eine Vorkühleinrichtung (05, 20) angeschlossen und auf eine Vorkühltemperatur heruntergekühlt wird;
- der Speisentransportwagen (01, 19) nach Ende der Vorkühlung von der Vorkühleinrichtung (05, 20) getrennt wird;
- der vorgekühlte Innenraum (04) des Speisentransportwagens (01, 19) mit Speisen befüllt wird.

2. Verfahren nach Anspruch 1,
**dadurch gekennzeichnet,**
**dass** die Kühleinrichtung des Speisentransportwagens (01, 19) in der Art eines Kühlmittelspeichers (09) ausgebildet ist, in dem ein geeignetes Kühlmittel, insbesondere Eisbrei, gespeichert werden kann, wobei der Speisentransportwagen (01, 19) nach Aufnahme der Speisen passiv durch Wärmeaufnahme des Kühlmittels gekühlt wird.

3. Verfahren nach Anspruch 2,
**dadurch gekennzeichnet,**
**dass** der Kühlmittelspeicher (09) während der Vorkühlung des Innenraums (04) an der Vorkühleinrichtung (05, 20) mit frischem Kühlmittel befüllt wird.

4. Verfahren nach Anspruch 3,
**dadurch gekennzeichnet,**
**dass** verbrauchtes Kühlmittel durch Zuführung von frischem Kühlmittel aus dem Kühlmittelspeicher (09) verdrängt wird.

5. Verfahren nach einem der Ansprüche 1 bis 4,
**dadurch gekennzeichnet,**
**dass** der Speisentransportwagen (01, 19) vor der Vorkühlung auf eine Sterilisationstemperatur erhitzt wird.

6. Verfahren nach Anspruch 5,
**dadurch gekennzeichnet,**
**dass** die Erhitzung des Speisentransportwagens (01, 19) auf Sterilisationstemperatur durch Waschen des Speisentransportwagens mit heißen Reinigungsflüssigkeiten erfolgt.

7. Verfahren nach Anspruch 5 oder 6,
**dadurch gekennzeichnet,**
**dass** verbrauchtes Kühlmittel vor der Erhitzung des Speisentransportwagens (01, 19) auf Sterilisationstemperatur aus dem Kühlmittelspeicher (09) entfernt wird.

8. Verfahren nach einem der Ansprüche 1 bis 7,
**dadurch gekennzeichnet,**
**dass** zur Vorkühlung des Innenraums (09) Kaltluft (21) in den Innenraum eingefördert wird.

9. Verfahren nach Anspruch 8,
**dadurch gekennzeichnet,**
**dass** die Kaltluft (21) während der Vorkühlung mittels einer Umwälzeinrichtung, insbesondere mittels eines Kaltluftgebläses (15, 16), zirkulierend umgewälzt wird.

10. Verfahren nach Anspruch 8 oder 9,
**dadurch gekennzeichnet,**
**dass** in der Vorkühleinrichtung (05, 20) zur Erzeugung der Kaltluft (12) ein Wärmetauscher (12, 13) vorgesehen ist, dem zur Kühlung der Kaltluft (21) Eisbrei zugeführt wird.

11. Vorkühleinrichtung (05, 20) zur Verwendung in einem Verfahren nach einem der Ansprüche 1 bis 10,
**dadurch gekennzeichnet,**
**dass** an der Vorkühleinrichtung (05, 20) ein Kühlsystem (12, 13, 15, 16) vorgesehen ist, mit dem ein geeignetes Kühlmittel (21) in den Innenraum (04) des Speisentransportwagens (01, 19) zur Vorkühlung des Innenraum (04) zugefördert werden kann.

12. Vorkühleinrichtung nach Anspruch 11,
**dadurch gekennzeichnet,**
**dass** als Kühlmittel zur Vorkühlung des Innenraums (04) Kaltluft (21) aus der Vorkühleinrichtung (05, 20) in den Innenraum (04) des Speisentransportwagens gefördert werden kann.

13. Vorkühleinrichtung nach Anspruch 12,
**dadurch gekennzeichnet,**
**dass** zur Förderung der Kaltluft (21) in den Innenraum (04) und/oder zur zirkulierenden Umwälzung der Kaltluft (21) im Innenraum (04) zumindest ein Kaltluftgebläse (15, 16) vorgesehen ist.

14. Vorkühleinrichtung nach Anspruch 12 oder 13,
**dadurch gekennzeichnet,**
**dass** in der Vorkühleinrichtung (05, 20) zumindest ein Wärmetauscher (12, 13) vorgesehen ist, mit dem die Kaltluft (21) durch ein geeignetes Kühlmittel, insbesondere Eisbrei, heruntergekühlt werden kann.

15. Vorkühleinrichtung nach einem der Ansprüche 11 bis 14,
**dadurch gekennzeichnet,**
**dass** an der Vorkühleinrichtung (05, 20) eine Fixiereinrichtung vorgesehen ist, mit der der Speisentransportwagen (01, 19) in einer definierten Vorkühlposition an der Vorkühleinrichtung (05, 20) fixiert werden kann.

16. Vorkühleinrichtung nach Anspruch 15,
**dadurch gekennzeichnet,**
**dass** der Speisentransportwagen (01, 19) durch den fixierenden Eingriff der Fixiereinrichtung mit einem zumindest geringfügigen Andruck gegen die Vorkühleinrichtung (05, 20) angepresst werden kann, wobei die Trennfuge (14) zwischen Speisentransportwagen (01, 19) und Vorkühleinrichtung (05, 20) geschlossen und/oder abgedichtet wird.

17. Vorkühleinrichtung nach Anspruch 16,
**dadurch gekennzeichnet,**
**dass** in der Trennfuge (14) zwischen Speisentransportwagen (01, 19) und Vorkühleinrichtung (05, 20) ein Dichtelement angeordnet ist.

18. Vorkühleinrichtung nach Anspruch 16 oder 17,
**dadurch gekennzeichnet,**
**dass** die Fixiereinrichtung zur Fixierung des Speisentransportwagens (01, 19) an der Vorkühleinrichtung (05, 20) elektromotorisch antreibbar ist.

19. Vorkühleinrichtung nach einem der Ansprüche 11 bis 18,
**dadurch gekennzeichnet,**
**dass** die Vorkühleinrichtung (05, 20) eine Kaltluftaustrittsöffnung (18) aufweist, durch die die Kaltluft (21) nach Fixierung des Speisentransportwagens (01, 19) an der Vorkühleinrichtung (05, 20) unmittelbar durch eine zur Beschickung des Speisentransportwagens (01, 19) mit Speisen vorgesehene Beschickungsöffnung (17) in den Speisentransportwagen (01, 19) überströmen kann.

20. Vorkühleinrichtung nach Anspruch 19,
**dadurch gekennzeichnet,**
**dass** der Querschnitt der Kaltluftaustrittsöffnung (18) an der Vorkühleinrichtung (05, 20) im Wesentlichen dem Querschnitt der Beschickungsöffnung (18) am Speisentransportwagen (01, 19) entspricht.

21. Vorkühleinrichtung nach Anspruch 20,
**dadurch gekennzeichnet,**
**dass** Kaltluftaustrittsöffnung (18) und Beschickungsöffnung (17) in der Vorkühlposition des Speisentransportwagens (01, 19) im Wesentlichen flächenkongruent einander gegenüberliegen.

22. Vorkühleinrichtung nach einem der Ansprüche 19 bis 21,
**dadurch gekennzeichnet,**
**dass** die Kaltluftaustrittsöffnung (18) der Vorkühleinrichtung (05, 20) mit einem Verschlusselement, insbesondere mit einem Verschlussrollo, verschlossen werden kann.

23. Vorkühleinrichtung nach Anspruch 22,
**dadurch gekennzeichnet,**
**dass** das Verschlusselement elektromotorisch antreibbar ist.

24. Vorkühleinrichtung nach einem der Ansprüche 11 bis 23,
**dadurch gekennzeichnet,**
**dass** an der Vorkühleinrichtung (05, 20) und am Speisentransportwagen (01, 19) jeweils zumindest ein Kopplungsorgan vorgesehen ist, die nach Fixierung des Speisentransportwagens (01, 19) in der Vorkühlposition aneinander zum Eingriff kommen, wobei durch die Kopplungsorgane ein Kühlmittel, insbesondere Eisbrei, in den Kühlmittelspeicher (09) des Speisentransportwagens (01, 19) eingefördert werden kann.

25. Vorkühleinrichtung nach einem der Ansprüche 11 bis 24,
**dadurch gekennzeichnet,**
**dass** an der Vorkühleinrichtung (05, 20) und am Speisentransportwagen (01, 19) jeweils zumindest ein Kopplungsorgan vorgesehen ist, die nach Fixierung des Speisentransportwagens (01, 19) in der Vorkühlposition aneinander zum Eingriff kommen, wobei durch die Kopplungsorgane ein Kühlmittel, insbesondere Eisbrei, aus dem Kühlmittelspeicher (09) des Speisentransportwagens (01, 19) abgeführt werden kann.

26. Vorkühleinrichtung nach Anspruch 24 oder 25,
**dadurch gekennzeichnet,**
**dass** den Kopplungsorganen zugeordnete Führungselemente, insbesondere Führungszapfen, vorgehen sind, durch die der Speisentransportwagen bei Annäherung an die Vorkühleinrichtung während des Verbindens der einander zugeordneten Kopplungsorgane geführt wird.
